# EUROPÄISCHE PATENTSCHRIFT

(11) **EP 2 642 421 B1**
(45) Veröffentlichungstag und Bekanntmachung des Hinweises auf die Patenterteilung: **20.05.2015**
(21) Anmeldenummer: 13159877.3
(22) Anmeldetag: 19.03.2013
(51) Int. Cl.: G06F 21/72, G06F 21/78, G06F 21/85, G06F 21/86, H01R 13/453

(54) **Datenladevorrichtung**
Data loading device
Dispositif de charge dentaire

(30) Priorität: 20.03.2012 EP 12160421
(43) Veröffentlichungstag der Anmeldung: 25.09.2013
(73) Patentinhaber: TechSAT GmbH, 85586 Poing (DE)
(72) Erfinder: Lesellier, Nicolas, 80636 München (DE); Alt, Christian, 82140 Olching (DE); Ferch, Oliver, 64560 Riedstadt (DE)
(74) Vertreter: Peter, Julian

(56) Entgegenhaltungen:
- WO-A1-2009/136161
- WO-A1-2012/087258
- US-A1- 2007 033 320
- US-B1- 8 376 760

## Beschreibung

Die Erfindung betrifft eine mobile Datenladevorrichtung gemäß Anspruch 1 und ein Verfahren gemäß Anspruch 11 zum gesicherten Datentransfer von signierten, verschlüsselten Daten einer Datenquelle zu einem Avionik-Gerät, insbesondere in Land-, Luft- oder Wasserfahrzeugen.

Die vorliegende Erfindung findet vornehmlich ihren Einsatz in der Avionik, sie ist jedoch auch bei den anderen genannten Verkehrsmitteln einsetzbar.

Moderne Transportmittel, insbesondere Flugzeuge, aber auch Kraftfahrzeuge und Schiffe sind heute mit elektronischen Anzeige-, Navigations-, Steuerungsund allgemeinen Kontrollinstrumenten und Geräten ausgerüstet, die als leistungsfähige Computer ausgebildet sind. Die Avionik, z. B. Flugkontroll- und Managementsysteme, e.g. Autopilot, das Flight Management System (FMS) und die Elektronik für Fly-by-Wire- Flugsteuerungssysteme (FBW) sowie Flugüberwachungsgeräte, wie z. B. Kollisionswarnsysteme (TCAS), die Überwachung der Flugzeugsysteme, wie z. B. die Triebwerke, die Kommunikation, im Flugzeug sowie in die Flugfunksysteme für Sprache und Text (Future Air Navigation System (FANS)) und auch sowie viele Anzeigegeräte und das Radar bedürfen eines regelmäßigen und in manchen Fällen eines zusätzlichen Updates ihrer Software und ihrer Daten. Ein solches Software-Update wird in aller Regel von zugelassenen Wartungsbetrieben, Werkstätten oder im Falle von Luftfahrzeugen durch die Fluggesellschaft ausgeführt.

Für den Ladevorgang werden Ladegeräte (Data Loader) eingesetzt, die entweder im Cockpit eines Flugzeugs fest eingebaut oder als tragbares Gerät (Portable Data Loader) ausgeführt sind. In der Luftfahrt findet der Datentransfer zwischen dem Ladegerät und dem jeweiligen Avionik-Geräten über international standardisierte Schnittstellen und Protokolle statt, z. B ist ARINC 664 ein auf Ethernet basierender Standard zur Vernetzung von Avionik-Komponenten in einem Flugzeug. Weitere Standards sind ARINC 429 (Datenbus für Verkehrsflugzeuge), ARINC 825 (Airbus A380, A350), oder ARINC 629 (Datenbus in der Boeing 777).

Im üblichen Stand der Technik werden diese Daten unverschlüsselt bereitgestellt, so dass die Gefahr von Manipulation nicht ausgeschlossen werden kann. Zwischenzeitlich besteht jedoch die Forderung an die den Flugzeugbaufirmen und der Luftfahrt allgemein und an die entsprechenden Ausrüster, die zu ladenenden Software-Updates abzusichern. Es sind daher sogenannte "Security Requirements" definiert worden. Im Kern eines solchen abgesicherten Ladeverfahrens stand die Forderung nach der Verwendung von sogenannten "digitalen Signaturen"(Digital Signature), die nur von den Herstellern der Avionik-Geräte für ihre jeweiligen Geräte vergeben werden können. Allerdings bieten die gängigen Verfahren zum Signieren oder Verschlüsseln von Daten nicht die ausreichende Sicherheit um mobile Vorrichtungen sicher zum Einsatz zu bringen. Damit der Ladevorgang durchgeführt werden kann ist bereits beim Einlesen von Daten, die mit einer digitalen Signatur versehen sind, eine entsprechende Software erforderlich. Daten, die von einem Speichermedium auf ein Avionik-Gerät, zum Beispiel einer LRU (Line Replacement Unit) geladen werden sollen, könnten zum Beispiel in einem Notebook mit entsprechender Software entschlüsselt werden und über eine oben bezeichnete international genormte Schnittstelle auf die LRU geladen werden. Hierdurch ergibt sich jedoch ebenfalls die Gefahr, unmittelbar mit dem Notebook die Daten zu manipulieren, so dass die ursprünglichen Daten um mittels des Notebooks hinzugefügte manipulierte Daten ergänzt und eingespeist würden.

Sollen Daten über eine mobile Datenladevorrichtung zum Beispiel zu einem Avionik-Gerät eines Flugzeuges übertragen werden, gibt es mehrere Sicherheitslücken auch für den Fall, dass die Daten verschlüsselt bereitgestellt werden, zu schließen.

Es werden einerseits die Sicherheitsrisiken als eine Kombination der Einzelprobleme betrachtet und andererseits auch als synergetisches Problem berücksichtigt, soweit die Einzelprobleme nicht lediglich isoliert betrachtet werden können. Im Folgenden werden daher die möglichen Bedrohungen synergetisch betrachtet und auch die einer Manipulation ausgesetzten Objekte.

Der Personenkreis, der an der Datenübertragung beteiligt ist, muss sicherstellen können, dass eine Manipulation von Gerät und/oder Daten in jedem Stadium sicher verhindert oder detektiert wird. Allerdings treten vorliegend völlig andere Risiken auf, als dies bei herkömmlichen kabelgebundenen Netzwerken oder Funk-Netzwerken im Intranet oder im Internet der Fall ist, da eine solche Datenübertragung vorliegend nicht gewünscht ist, unabhängig davon ob diese über LAN oder WLAN-Verbindungen erfolgen würde. Vorliegend ist eine Person damit beauftragt die Daten manuell zu einem Avionik-Gerät zu übermitteln. Diese Person kann aber nur begrenzt überwacht werden. Ferner ist diese Person gleichzeitig im Besitz des zu schützenden Objektes und der Daten.

Es soll mittels einer vorzugsweise kabelgebundene und sichere Verbindung und Datenübertragung durch manuelles Verbinden einer mobilen Datenladevorrichtung mit dem entsprechenden Gerät bereitgestellt werden.

Es bestehen dabei unter anderem die folgenden Risiken:
- Manipulieren und Ausspionieren sowie "Hacken" der zu übertragenden Daten;
- Einspielen von manipulierten Daten zur Datenladevorrichtung;
- Manipulieren und Ausspionieren sowie Hacken der Software der Datenladevorrichtung;
- Dekodieren oder Ermitteln bzw. Hacken des Schlüssels bei Verwendung von verschlüsselten Daten;
- Dekodieren oder Nachbauen einer Signatur bei Verwendung von signierten Daten.

Es ist daher Aufgabe der vorliegenden Erfindung eine Datenladevorrichtung bereitzustellen, die die zuvor genannten Bedrohungen sicher abwehren und eine Manipulation der Daten und Objekte ausschließt.

US 2007/0033320 beschreibt einen Kryptographischen Dangle mit zwei USB-Schnittstellen, der an einer Schnittstelle Daten entgegennimmt und diese an der anderen Schnittstelle verschlüsselt bzw entschlüsselt ausgibt.

Diese Aufgabe wird erfindungsgemäß mit einer Datentadevorrichtung gemäß Anspruch 1 und einem Verfahren gemäß Anspruch 9 gelöst. Grundgedanke der Erfindung ist es, eine Datenladevorrichtung bereitzustellen, bei der nur verschlüsselte Daten mit einer definierten Signatur übertragen werden können und zum Schutz eine vorzugsweise sicherheitsgekapselte Entschlüsselungsvorrichtung mit einem Betriebssystem bereitgestellt wird, das mit einer Datenverarbeitungsvorrichtung verbunden ist und das über eine DSL (Digitale-Signatur-Certification)-Einheit verfügt sowie über eine mit dieser gekoppelten Entschlüsselungseinheit zum Entschlüsseln, der verifizierten Daten. Dabei ist zu bemerken, dass die Signatursoftware und/oder die Entschlüsselungssoftware und/oder die Betriebssystemdaten als solche selbst verschlüsselt in der Entschlüsselungsvorrichtung abgelegt bzw. gespeichert sind. Durch diese mehrfach wechselseitige Kopplung der Hard-und Softwarekomponenten und auch der mechanischen und/oder elektrischen Kapselung kann ein durchgehender Schutz gegen die auftretenden Bedrohungen sichergestellt werden.

Erfindungsgemäß wird daher eine mobile Datenladevorrichtung zum gesicherten Datentransfer von signierten und verschlüsselten Daten einer Datenquelle über eine Entschlüsselungsvorrichtung zu einem Avionik-Gerät bereitgestellt, die ein Gehäuse aufweist, in das eine Datenverarbeitungseinrichtung zumindest teilweise eingebracht ist und die eine Datenquelle mit verschlüsselten und signierten Daten aufweist sowie eine von einem Gehäuse umgebene Entschlüsselungsvorrichtung, die eine Entschlüsselungseinheit und eine DSC (Digital-Signature-Certification)-Einheit sowie ein Betriebssystem aufweist, in dem eine vorzugsweise verschlüsselte Signatursoftware und/oder eine verschlüsselte Entschlüsselungssoftware abgespeichert ist.

Erfindungsgemäß sind die Entschlüsselungseinheit und die DSC-Einheit miteinander vorzugsweise seriell oder hierarchisch gekoppelt. Bevorzugt ist die Kopplung dergestalt, dass die Bereitstellung oder der Austausch wenigstens eines Verifikationsparameters zur Datenechtheit gewährleistet ist. Besonders bevorzugt ist, wenn die Entschlüsselungseinheit seriell mit der DSC-Einheit gekoppelt ist, so dass erst nach Übergabe eines Verifikationsparamters über die Echtheit der Daten (Überprüfung der Signatur) eine Entschlüsselung der Daten mit dem Schlüssel stattfinden kann.

In einer vorteilhaften Ausführungsform der Erfindung wird damit eine mobile Datenladevorrichtung bereitgestellt, wobei die Entschlüsselungseinheit und die DSC-Einheit derart miteinander gekoppelt sind, dass eine Datenübertragung zu einer Schnittstelle nur dann erfolgt, sobald die DSC-Einheit einen die Echtheit repräsentierenden Verifikationsparameter erzeugt, um die Entschlüsselungseinheit zur Entschlüsselung der Daten mittels der Entschlüsselungssoftware zu aktivieren.

In einer besonders vorteilhaften Ausführungsform der Erfindung wird damit eine mobile Datenladevorrichtung bereitgestellt, bei der die Entschlüsselungssoftware und/oder die Signatursoftware in der Entschlüsselungsvorrichtung selbst verschlüsselt gespeichert ist und so ein Ausspionieren und ein Hacken der Signatur und/oder der Software sicher verhindert wird. Günstig ist es, wenn das Betriebssystem der Entschlüsselungsvorrichtung eine Verifikationseinrichtung aufweist, die ausgebildet ist, ein Software-Update für das Betriebssystem zu verifizieren und dabei auch eine geänderte Signaturverifikation insbesondere eine verschlüsselte Signatur an die DSC-Einheit zu übertragen. Hierdurch wird gewährleistet, dass regelmäßige Software-Updates sicher übertragen werden können und jeweils eine neue geänderte Signatur verwendet wird.

Um auch das Analysieren, Ausspähen und Hacken der Entschlüsselungsvorrichtung zu gewährleisten, ist es besonders vorteilhaft das Gehäuse der Entschlüsselungsvorrichtung mittels eines versiegelten Sicherheitsgehäuse bereitzustellen, bei dem eine Sicherheitsvorkehrung angeordnet ist, die ein Öffnen des Gehäuses detektieren kann und die die gesamte Vorrichtung außer Funktion setzt oder jedenfalls die Übertragung dauerhaft unterbindet. Bevorzugt ist es das versiegelte Sicherheitsgehäuse mit einer mechanischen und/oder elektronischen Versiegelung so versehen ist, dass bereits ein Öffnen des Gehäuses die Übertragungsfunktion der Datenladevorrichtung verhindert. Günstig ist es, wenn die mobile Datenladevorrichtung eine Schnittstelle für den Eingang der signierten und verschlüsselten Daten aufweist und diese vorzugsweise an einem zugänglichen, d.h. nicht gekapselten Bereich der Datenverarbeitungsvorrichtung vorgesehen ist.

Um einen weiteren Schutz bereitzustellen ist das Sicherheitsgehäuse gemeinsam mit der Datenverarbeitungsvorrichtung in einem Gehäuse untergebracht, wobei das gemeinsame Gehäuse mit Vorteil aus einem oberen und unteren vorzugsweise öffenbaren Gehäusebereich aus zwei Gehäuseteilen besteht. In einer vorteilhaften Ausführungsform ist die Datenverarbeitungsvorrichtung mit einer Benutzeroberfläche ausgestattet, die in einem ersten Gehäusebereich so untergebracht ist, dass die Benutzeroberfläche zugänglich ist und wobei das Sicherheitsgehäuse in einem zweiten, vom ersten Gehäusebereich vorzugsweise zusätzlich durch eine Verschlussplatte abgetrennten Gehäusebereich angeordnet ist.

Da die mobile Datenladevorrichtung zur Übertragung von Systemdaten für ein Avionik-Gerät oder ein durch das Avionik-Gerät gesteuertes Gerät bestimmt ist, weist die Datenladevorrichtung mit Vorteil wenigstens eine Schnittstelle auf, über die die verifizierten und entschlüsselten Daten basierend auf einem Standard-Datenbusprotokoll an die Avionik-Einheit übertragen werden können. Erfindungsgemäß wird auch ein Datenübertragungsverfahren zum gesicherten Datentransfer von signierten und verschlüsselten Daten einer Datenquelle einer mobilen Datenladevorrichtung zu einem Avionik-Gerät unter Verwendung einer wie zuvor beschriebenen erfindungsgemäßen Datenladevorrichtung mit den folgenden Schritten bereitgestellt:
a. Aktivieren der Datenübertragung mittels Betätigen eines Aktivierungsmoduls der Benutzeroberfläche;
b. Übertragen der signierten und verschlüsselten Daten an die Enschlüsselungs-vorrichtung und Übertragen der signierten und verschlüsselten Daten an die Enschlüsselungsvorrichtung (7) und erzeugen eines Verfikationsparameters abhängig von der Echtheit der Signatur mittels der DSC-Einheit z.B. durch Erzeugen eines Verfikationsparameters "ECHT" oder "UNECHT" abhängig von der Echtheit der Signatur mittels der DSC-Einheit;
c. Aktivieren der Entschlüsselungssoftware zum Entschlüsseln der Daten in der Entschlüsselungseinheit sofern der Verifikationsparameter einem Wert für die Echtheit der Daten entspricht (z.B. "ECHT") sowie
d. Übertragen der entschlüsselten Daten an das Avionik-Gerät ohne eine Zwischenspeicherung in der Enschlüsselungsvorrichtung.

Bevorzugt ist ein Datenübertragungsverfahren bei dem beim Aktivieren der Datenübertragung gegebenenfalls ein Software-Update für das Betriebssystem vorzugsweise zusammen mit einer geänderten Signaturverifikation an die DSC-Einheit übertragen wird.

Es werden die Daten ohne eine Zwischenspeicherung in der Datenladevorrichtung direkt an die Avionik-Einheit übertragen. Hierdurch wird sichergestellt, dass einerseits das Bereitstellen eines nichtflüchtigen Speichers vermieden werden kann und damit auch die Gefahr des Missbrauchs der entschlüsselten Daten. Mit Vorteil werden die Daten unmittelbar nach Konvertieren der Daten von einem Datenkonverter von der Entschlüsselungseinheit direkt an die Avionik-Einheit übertragen und nach Entfernen der Datenladevorrichtung liegen die Daten nur signiert und verschlüsselt in der Datenverarbeitungsvorrichtung vor.

Selbstverständlich sind die dem Verfahren zugrunde gelegten Merkmalen mit denen der Beschreibung der Vorrichtung genannten Merkmalen auch in Kombination einzeln und zusammen als offenbarte Ausführung im Sinne der vorliegenden Erfindung zu betrachten, auch wenn nicht sämtliche Kombinationen von Merkmalen im Einzelnen beschrieben wurden.

Von besonderem Vorteil ist es, dass die Entschlüsselungsvorrichtung gemeinsam mit einem Bus in dem Gehäuse ist, wobei der Bus mit dem Ausgang verbunden ist. Durch die gemeinsame Anordnung der Entschlüsselungsvorrichtung und des Bus-Interface in einem gemeinsamen Gehäuse ist eine kompakte Bauweise möglich. Von Vorteil ist, dass die Leitung zwischen der Datenladevorrichtung und der Computereinheit eine gesicherte bi-direktionale Leitung ist. Hierdurch wird sichergestellt, dass in dem Avionik-Gerät vorgesehene Steuerbefehl von dem Lader erkannt werden können und so ein reibungsloser Ladevorrang sichergestellt ist.

Günstig ist es, wenn die Entschlüsselungsvorrichtung ein Single-Board-Computer mit Linux-Betriebssystem ist und ferner einen Datenkonverter aufweist.

Von besonderem Vorteil ist es, dass die Datenladevorrichtung eine mobile Vorrichtung ist und das Gehäuse mit dem Entschlüsselungs-Computer in einem gesicherten und versiegelten Raum in einem tragbaren Behältnis angeordnet ist.

Dabei ist es günstig, dass das tragbare Behältnis einen verschließbaren Koffer mit einer Verschluss-Zwischenplatte ist, über die der versiegelte Raum in den Koffer zugänglich ist. Hierbei kann bei einer besonderen Ausführungsform die Befestigung der Verschluss-Zwischenplatte in den Koffer mit einer optischen und/oder elektronischen Versiegelung versehen sein. Dies ermöglicht eine Prüfung der Ladevorrichtung daraufhin, ob eine Manipulation an den Lader vorgenommen worden ist.

Besonders günstig ist es, wenn die Versiegelung mit einem Unterbrecherschalter in den Entschlüsselungs-Computer gekoppelt ist und ein Bruch der Versiegelung den Entschlüsselungs-Computer außer Funktion setzt. Auf diese Weise ist sichergestellt, dass keine unerwünschten Daten in den Avionik-Computer eingespeist werden. Eine weitere Vorsichtsmaßnahme kann darin bestehen, dass ein Interface unter der Verschlussplatte eingebaut ist.

Die Datenquelle, von der die Entschlüsselungsvorrichtung die verschlüsselten und signierten Daten bezieht, kann ein Datenspeicher sein, mit dem dann auch der Ladevorgang gesteuert werden kann.

Vorteilhafterweise ist das tragbare Behältnis ein verschließbarer Koffer mit einer Verschluss-Zwischenplatte über die der Raum mit dem Entschlüsselungs-Computer zugänglich ist. Bei einer solchen Konstruktion ist es vorteilhaft, wenn die Befestigung der Verschluss-Zwischenplatte in den Koffer mit einer optischen und/oder elektronischen Versiegelung versehen ist. Hierdurch kann von außen oder an dem Notebook unmittelbar erkannt werden, ob eine unbefugte Manipulation an dem Koffer stattgefunden hat.

Vorteilhaft ist dabei, wenn die Versiegelung mit einem Unterbrecherschalter in den Entschlüsselungs-Computer gekoppelt ist und ein Bruch der Versiegelung den Entschlüsselungs-Computer außer Funktion setzt.

Vorteilhaft ist, wenn die Datenverarbeitungsvorrichtung mit Eingabetastatur oder einem sonstigen Human-Machine-Interface auf der Verschluss-Zwischenplatte angeordnet ist. Hierbei kann das Notebook auf der Verschluss-Zwischenplatte verschraubt sein;

Bei einer günstigen Ausführungsform kann vorgesehen sein, dass die Verschluss-Zwischenplatte abgewinkelt ist und eine senkrechte Wand aufweist, die in dem Koffer einen freien offenen Raum neben dem gesicherten Raum abtrennt. Vorteilhaft ist dabei, wenn der Ausgang in der senkrechten Wand angeordnet ist, so daß der Zugang nur bei geöffnetem Koffer möglich ist.

Im Folgenden wird ein Ausführungsbeispiel der Erfindung in Verbindung mit den Figuren näher erläutert. Es zeigen
- Fig. 1: eine Entschlüsselungseinheit in
a) schematischer Darstellung von der Vorderseite,
b) schematischer Darstellung von der Rückseite,
c) schematischer Darstellung eines Schnitts, und
d) schematischer Darstellung von oben;
- Fig. 2: eine Datenladevorrichtung in
a) einem Behältnis nach Art eines Aktenkoffers mit aufgeklapptem Deckel und darin angeordneten Notebook und Ladekabeln,
b) eine Seitenansicht des unteren Teils des Koffers von links;
- Fig. 3: eine schematische Darstellung einer Datenladevorrichtung von der Seite mit aufgeklapptem Kofferdeckel und aufgeklapptem Notebook, entsprechend eines Schnitts B-B in Fig.2;
- Fig. 4: eine Ansicht eines Schnitts A-A aus Fig.2 mit schematischer Darstellung des Einbaus der Entschlüsselungseinheit unter einer Verschluss-Zwischenplatte;
- Fig. 5: eine schematische Systemdarstellung der Datenladevorrichtung;
- Fig. 6: ein Blockdiagramm der Datenladevorrichtung und
- Fig. 7: eine weitere schematische Systemdarstellung der Datenladevorrichtung.

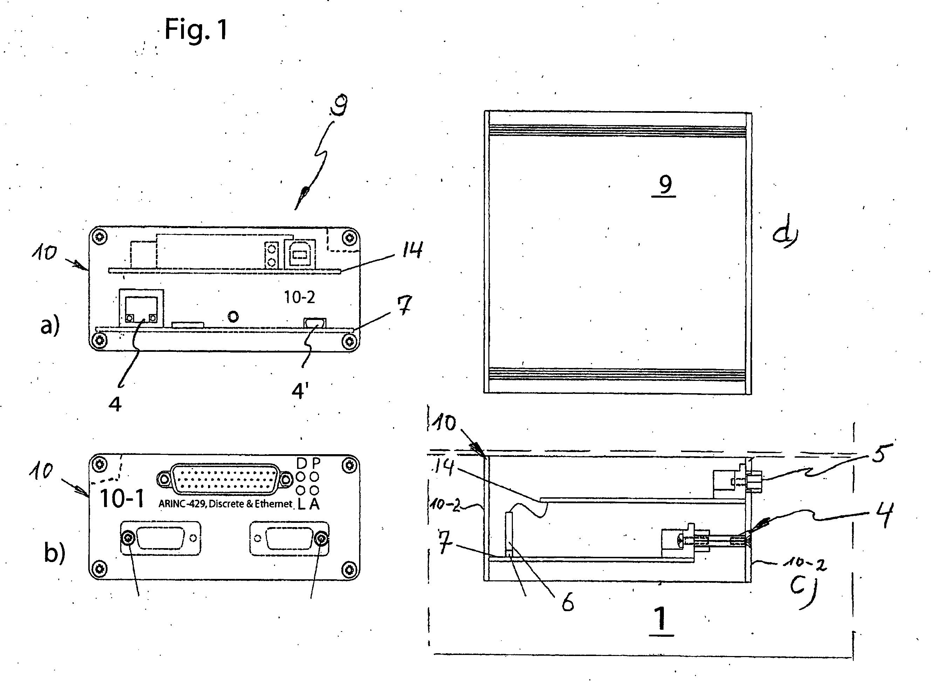

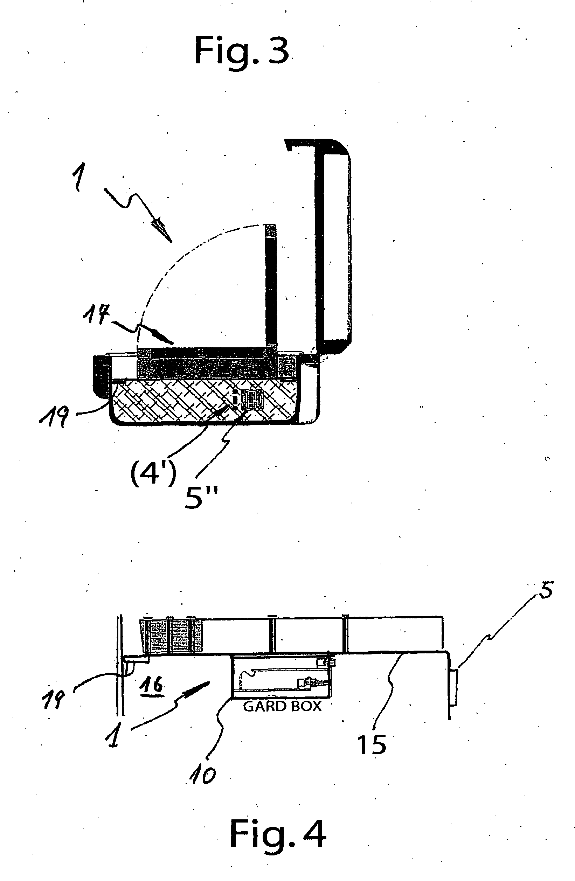

Die nachfolgende, in Verbindung mit den Figuren 1 - 6 dargelegte Beschreibung eines Ausführungsbeispiels einer Datenladevorrichtung beschränkt sich lediglich auf die wesentlichen Merkmale der Erfindung.

In den Figuren 1 a) bis 1 d) ist eine Entschlüsselungseinheit 9 einer Datenladevorrichtung 1 in verschiedenen Ansichten dargestellt. Die Datenladevorrichtung 1 ist in Fig. 1 a) bis d) nur skizzenhaft dargestellt. Ihrer Bauart nach ist die Datenladevorrichtung sowohl mobil als auch fest im Cockpit einsetzbar.

Die Entschlüsselungseinheit 9 weist ein gesichertes und versiegeltes Gehäuse 10 auf, das mit einem Eingang 4 für die verschlüsselten Daten und mit einem Ausgang 5 zum Laden entschlüsselter Daten zu einer Computer-Einheit 3 versehen ist. Sie ist in einer Datenleitung 6 zwischen Ein- und Ausgängen 4 bzw. 5 angeordnet. Die Entschlüsselungseinheit 9 ist als ein Entschlüsselungs-Computer 7 mit einem Entschlüsselungsprogramm zum Entschlüsseln der von der Datenquelle dem Eingang 4 gelieferten verschlüsselten Daten versehen. Das gesicherte und versiegelte Gehäuse 10 besteht in der Regel aus einem Vierkantenhohlprofil mit entsprechender Bemessung, dessen offene Seiten von Seitenwänden 10-1 und 10-2 verschlossen sind. An diesen Seitenwänden 10-1 und 10-2 sind der Entschlüsselungs-Computer 7 und ein Bus-Interface 14 gehalten. An der Seitenwand 10-2 ist der Eingang 4 mit dem Entschlüsselungs-Computer 7 und der Ausgang 5 mit dem Bus-Interface 14 verbunden. Die Sicherung besteht darin, dass die Seitenwände 10-1 und 10-2 an dem Hohlprofil mit Sicherheitsschrauben, die nur durch ein besonderes Werkzeug zu öffnen sind, verschraubt sind. Die Versiegelung kann, beispielshaft, durch ein nur einem Berechtigten zur Verfügung stehendes Klebsiegel bereitgestellt werden, dass auf mindestens zwei der Schrauben auf jeder Seitenwand 10-1 und 10-2 aufgeklebt ist.

Die Versiegelung ist in den Figuren 1a und 1b schematisch durch eine gestrichelte Linie in den Ecken des Gehäuses dargestellt. Die Daten können am Eingang 4 zum einen über eine Ethernet-Leitung, zum andern jedoch auch über einen USB-Stecker 4' auf den Entschlüsselungs-Computer geladen werden. Der USB-Stecker 4' ist in Fig. 1 a im Abstand von den Eingang für den Ethernet-Anschluss dargestellt.

Im mobilen Einsatz kann die Entschlüsselungseinheit 9 als separates Gerät gemeinsam mit einem Notebook 17 betrieben werden, wodurch auch ein HMI (Human-Machine-Interface) bereitgestellt wird.

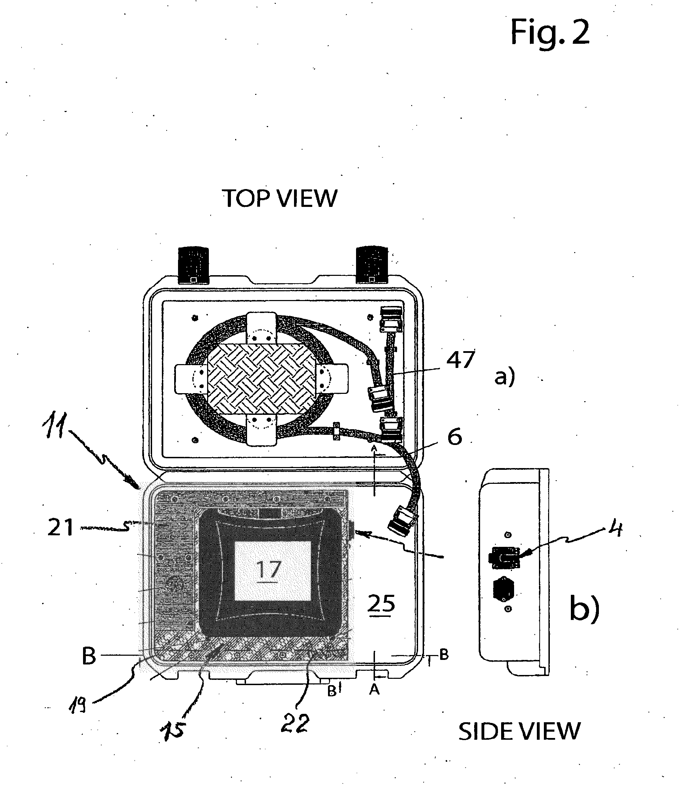

Wie in den Figuren 2 bis 4 dargestellt, ist die Entschlüsselungseinheit in einem gesicherten und versiegelten Raum 16 in einem kofferartigen tragbaren Behältnis 11 angeordnet. Der verschließbare Koffer weist eine Verschluss-Zwischenplatte 15 auf, über die der Raum 16, in dem sich die Entschlüsselungseinheit befindet, zugänglich ist.

Das Gehäuse 10 der Entschlüsselungseinheit 9 ist unter der Verschluss-Zwischenplatte 15 verschraubt und bildet mit der Verschluss-Zwischenplatte 15 eine Montageeinheit. Bei bestimmten Anwendungsfällen kann die Befestigung der Verschluss-Zwischenplatte 15 in dem Koffer mit einer optischen und/oder elektronischen Versiegelung 22 versehen sein. Im Falle einer elektronischen Versiegelung 22 schaltet ein Bruch der Versiegelung einen Unterbrecherschalter 23, der mit dem Entschlüsselungs-Computer 7 gekoppelt ist, so dass ein Bruch der Versiegelung den Entschlüsselungs-Computer 7 außer Funktion setzt. Hierdurch vermeidet man die Gefahr einer unmittelbaren Manipulation von Daten in der Entschlüsselungseinheit.

Der Kofferinnenraum ist in einen vorbestimmten Abstand über den Kofferboden mit einem Rahmen 19 ausgestattet, auf dem die Verschluss-Zwischenplatte 15 in geeigneter Weise verschraubt ist. Um einen abgeschlossenen Raum zu bilden, besitzt die Verschluss-Zwischenplatte 15 eine nach unten abgewinkelte senkrechte Wand 24. Bei eingesetzter Verschluss-Zwischenplatte 15 ist der Raum 16 nach dem Verschrauben der Platte von außen nicht mehr ohne weiteres zugänglich, d.h., ein unbefugtes Öffnen ist erkennbar, z.B. durch den Bruch eines Siegels.

Bei dem in Figuren 2 bis 5 dargestellten Ausführungsbeispiel ist ein Notebook 17 fest auf der Verschluss-Zwischenplatte 15 aufgeschraubt, wobei eine Abdeckung 21 die Verkabelung zwischen dem Notebook und der Entschlüsselungseinheit gegen Zugriff von außen sichert. Hierzu umschließt die Abdeckplatte 21 im Bereich der relevanten Ein- und Ausgänge des Notebooks dessen Seitenrand dergestalt, dass die Arbeitsoberfläche des Keyboards bei geöffnetem Notebook-Deckel im Wesentlichen bündig der Abdeckung 19 verläuft.

An der senkrechten Wand 24 ist ein Ausgang 5 mit einem Stecker-Anschluss für das Datenverbindungskabel zum Dateneingang im Cockpit des Flugzeugs ausgestattet. Bei dem Dateneingang im Cockpit kann es sich um den Eingang in die LRU oder um einen allgemeinen, für diese Zwecke vorgesehenen Eingang handeln.

In Fig. 2b ist eine Seitenansicht des Koffers wiedergegeben. Darin ist erkennbar, dass an der Außenwand des Koffers ein erster Eingang 4 für auf das Notebook zu ladende Dateien angeordnet ist. Desweiteren kann hier auch noch ein Stecker zur Stromversorgung der gesamten Ladevorrichtung vorgesehen sein. Die senkrechte Wand 24 begrenzt im Koffer 11 einen offenen Raum 23, in dem ein Ausgang 5' zur Computereinheit (LRU) 3 ausgebildet ist. Neben diesem Ausgang 5" ist ein USB-Slot für einen Eingang 4' ausgebildet, der es ermöglicht, auf einem USB-Stick geladene Daten auf die in einem solchen Koffer eingebaute Entschlüsselungseinheit zu laden.

Fig. 5 zeigt eine schematische Darstellung der einzelnen Bauteile einschließlich des Datenflusses. Eine mobile Datenladevorrichtung wird üblicherweise in einen "Shop" an eine Datenquelle 2 angeschlossen, von der verschlüsselte, mit einer digitalen Signatur versehene Daten über eine Ethernet-Leitung, hier als Datenleitung 6 bezeichnet, in die Datenladevorrichtung über den Eingang 4 heruntergeladen werden. Der Ladevorgang kann jedoch auch über einen USB-Stick erfolgen, der in einen Slot 4' eingesteckt wird. Die Vorrichtung kann so ausgelegt sein, dass die Daten entweder in dem Entschlüsselungscomputer oder in dem sich im Koffer 11 befindenden Notebook 17 gespeichert. Sodann kann die Datenladevorrichtung (Portable Data Loader) von einem Monteur in das Cockpit oder in ein anderes Kontroll-/Steuerzentrum getragen und eine Verbindungsleitung 6 an den Ausgang 5" im freien Raum 25 des Koffers angeschlossen werden. Das andere Ende der Lade-Leitung wird mit einem entsprechenden Socket im Cockpit oder einer sonstigen Computereinheit angeschlossen. Über einen entsprechenden Steuerbefehl, der über die Tastatur des Notebooks eingegeben wird, wird das Startsignal zum Transport der verschlüsselten Daten zur Entschlüsselungseinheit 9 gegeben oder, für den Fall, dass die Daten auf den Entschlüsselungscomputer geladen waren, zum Entschlüsseln. Die Entschlüsselungseinheit 9 entschlüsselt die Daten und speichert sie auf einen Zwischenspeicher 8 der Entschlüsselungseinheit ab. Von dort werden die unverschlüsselten Daten über den Ausgang 5' und der internen Leitung 6 dem Ausgang 5" und von dort über die Datenleitung 6 der Computereinheit, im Fall eines Flugzeugs einer LRU eingespeichert.

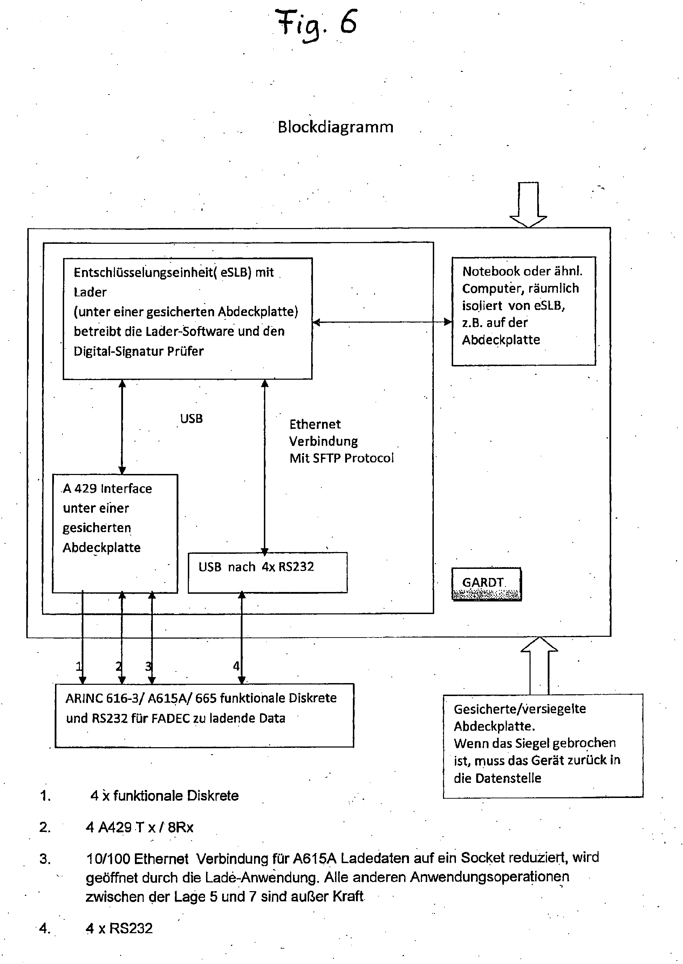

Fig. 6 zeigt ein Blockdiagramm des Systems angewandt auf einen Ladevorgang bei einem Verkehrsflugzeug. Die Entschlüsselungseinheit (eSLB) ist über eine USB-Verbindung mit einem A429 Interface verbunden. Sowohl die Entschlüsselungseinheit eSLB als auch das A429 Interface befinden sich unter der gesicherten Abdeckplatte. Die Datenverbindung von der Entschlüsselungseinheit eSLB zu einem Notebook erfolgt über eine Ethernet-Verbindung, wobei von dem SFTP-Protokoll Gebrauch gemacht wird. Der Ausgang aus der Entschlüsselungseinheit führt über eine bi-direktionale Leitung in das Cockpit und bedient hierbei eine ARINC 615-3/A615A/665 und weitere funktionale Diskrete, wobei die zu ladenden Daten für FADEC über mindestens eine RS232 zu laden sind. Die Ethernet-Verbindung für A615A Ladedaten ist auf ein Socket reduziert und wird durch die Lade-Anwendung geöffnet.

Es wurde eine Entschlüsselungseinheit beschrieben, wie sie im mobilen Einsatz verwendet wird. Es versteht sich, dass mit entsprechenden Modifikationen eine solche Einheit auch im Flugzeug, z. B. als eine LRU, eingebaut sein kann.

Fig. 7 zeigt eine weitere schematische Darstellung der einzelnen Bauteile einer erfindungsgemäßen Ausführungsform einer Datenladevorrichtung 1 ähnlich der Fig. 5. Die Datenladevorrichtung 1 umfasst ein Gehäuse 11 in dem eine Datenverarbeitungsvorrichtung 17 angeordnet ist. Die Datenverarbeitungsvorrichtung 17 weist eine Benutzeroberfläche 18 auf, um die Datenverarbeitungsvorrichtung 17 durch einen Benutzer zu bedienen. Der Benutzer kann z.B. die Aktivierung der Datenübertragung über die benutzeroberfläche der Datenverarbeitungsvorrichtung 17 starten.

Die Datenverarbeitungsvorrichtung 17 weist ferner ein Betriebssystem 17a und einen Datenspeicher 2 auf, der mit dem Eingang 4 zum Laden der signierten und verschlüsselten Daten verbunden ist. Die Datenladevorrichtung 1 umfasst ferner im Gehäuse 11 eine, ein gekapseltes Sicherheitsgehäuse 10 aufweisende, Entschlüsselungsvorrichtung 7, die über Datenverbindungen (6, 6') mit der Datenverarbeitungsvorrichtung 17 verbunden ist. Die Entschlüsselungsvorrichtung 7 umfasst eine Entschlüsselungseinheit 9a, eine DSC-Einheit 9b, die über eine Kopplung 9c miteinander in Interaktion stehen. Vorliegend ist eine serielle Kopplung vorgesehen. Das heißt, dass in einem ersten Schritt eine Verifikation der Echtheit der aus dem Datenspeicher 2 stammenden Daten durch die DSC-Einheit 9b erfolgt und in einem seriell nachgeschalteten Schritt die Entschlüsselung der verifizierten Daten durch die Entschlüsselungseinheit 9a erfolgt. Ferner ist ein Betriebssystem 30 mit einer Hardware 31 mit einem Betriebssystemkern 32 und Software 33 vorgesehen, wobei die Signatur und die Signatursoftware verschlüsselt abgespeichert ist. Ferner verfügt die Datenladevorrichtung über Schnittstellen 5, 5' um diese mit einem Avionik-Gerät 3 zu verbinden und Systemdaten 3a bzw. Systemsoftware 3b an das Avionik-Gerät 3 zu übertragen.

### Bezugszeichenliste

(1) Datenladevorrichtung
(2) Datenquelle
(3) Avionik-Gerät
(3a) Computer-Einheit (LRU)
(3b) Systemsoftware
(4) Eingang (Schnittstelle) für die zu ladenden verschlüsselten, signierten Daten
(5) Ausgang zur Computer-Einheit,
(6) Datenleitung zwischen Ein- und Ausgang
(6') Datenleitung zwischen Ein- und Ausgang
(7) Entschlüsselungsvorrichtung
(8) Speicher
(9) Entschlüsselungseinheit (eSLB)
(9a) DSC-(Digital Signature Certification)-Einheit
(9b) Kopplung
(10) Gehäuse, gesicherten/versiegelten
(11) Gehäuse (tragbares Gehäuse z.B. Koffer)
(12) bi-direktionale Leitung
(13) gesicherten Abdeckplatte
(14) ARINC 429 Interface Bus, insbesondere ein USB AE Sybus ARINC 429 Interface,
(15) Verschlussplatte im Koffer 11
(16) Eigener Raum
(17) Datenverarbeitungsvorrichtung
(17a) Betriebssystem
(18) Benutzeroberfläche (Eingabetastatur oder HMI)
(19) Rahmen im Koffer
(20) Verbindungsleitung
(21) Eingang für eine erste Datenquelle
(22) Versiegelung (22)
(23) Unterbrecherschalter
(24) Senkrechte Wand
(25) Offener Raum
(30) Betriebssystem
(31) Hardware
(32) Betriebssystemkern
(33) Software

## Patentansprüche

1. Mobile Datenladevorrichtung (1) zum gesicherten Datentransfer von signierten und verschlüsselten Daten einer Datenquelle (2) über eine Entschlüsselungsvorrichtung (17) zu einem Avionik-Gerät (3), wobei die Datenverarbeitungsvorrichtung (1) eine Schnittstelle (4) für den Eingang der signierten und verschlüsselten Daten aufweist und die Datenladevorrichtung (1) wenigstens eine Schnittstelle (5, 5') aufweist, über die die entschlüsselten Daten an die Avionik-Einheit übertragen werden können, **dadurch gekennzeichnet, dass**
a. die Schnittstelle (5, 5') zur Übertragung der Daten basierend auf einem ARINC Datenbusprotokoll ausgebildet ist;
b. die Datenladevorrichtung ein Gehäuse (11) mit einer Datenverarbeitungseinrichtung (17) mit einer Datenquelle (2) mit verschlüsselten und signierten Daten aufweist,
c. die Datenladevorrichtung ferner ein Gehäuse (10) mit eine Entschlüsselungsvorrichtung (7), die eine Entschlüsselungseinheit (9), eine DSC (Digital-Signature-Certification)-Einheit (9a) sowie ein Betriebssystem (30) aufweist und wobei in dem Betriebssystem eine Signatursoftware und eine Entschlüsselungssoftware verschlüsselt gespeichert sind, wobei
d. die Entschlüsselungseinheit (9) und die DSC-Einheit (9a) zum Austausch wenigstens eines Verifikationsparameters für die Datenechtheit miteinander gekoppelt sind.

2. Mobile Datenladevorrichtung (1) nach Anspruch 1, **dadurch gekennzeichnet, dass** die Entschlüsselungseinheit (9) und die DSC-Einheit (9a) über solche Kopplungsmittel miteinander gekoppelt sind, dass eine Datenübertragung von Daten zu einer Schnittstelle (5, 5') nur dann erfolgt, wenn die DSC-Einheit (9a) abhängig von einer Echtheitsprüfung einen Verifikationsparameter an die Entschlüsselungseinheit (9) übergibt, um die Entschlüsselung der Daten mittels der Entschlüsselungssoftware zu aktivieren.

3. Mobile Datenladevorrichtung (1) nach Anspruch 1 oder 2, **dadurch gekennzeichnet, dass** die Entschlüsselungssoftware und/oder die Signatursoftware in der Entschlüsselungsvorrichtung (7) verschlüsselt gespeichert sind.

4. Mobile Datenladevorrichtung (1) nach wenigstens einem der vorangehenden Ansprüche, **dadurch gekennzeichnet, dass** das Gehäuse (10) ein versiegeltes Sicherheitsgehäuse (10) darstellt.

5. Mobile Datenladevorrichtung (1) nach wenigstens einem der vorangehenden Ansprüche, **dadurch gekennzeichnet, dass** das versiegelte Sicherheitsgehäuse (10) mit einer mechanischen und/oder elektronischen Versiegelung (22) so versehen ist, dass ein Öffnen des Gehäuses (10) die Übertragungsfunktion der Datenladevorrichtung (1) verhindert.

6. Mobile Datenladevorrichtung (1) nach wenigstens einem der vorangehenden Ansprüche, **dadurch gekennzeichnet, dass** das Sicherheitsgehäuse (10) im Gehäuse (11) untergebracht ist.

7. Mobile Datenladevorrichtung (1) nach wenigstens einem der vorangehenden Ansprüche, **dadurch gekennzeichnet, dass** die Datenverarbeltungsvorrichtung (17) über eine Benutzeroberfläche (18) in einem ersten Gehäusebereich (11a) verfügt und wobei das Sicherheitsgehäuse (10) in einem zweiten, vom ersten Gehäusebereich (11 a) durch eine Verschlussplatte getrennten Gehäusebereich (11b) angeordnet ist.

8. Mobile Datenladevorrichtung (1) nach wenigstens einem der vorangehenden Ansprüche, **dadurch gekennzeichnet, dass** das Betriebssystem (30) der Entschlüsselungsvorrichtung (7) eine Verifikationseinrichtung aufweist, die ausgebildet ist, ein Software-Update für das Betriebssystem zu verifizieren und dabei auch eine geänderte Signaturverifikation an die DSC-Einheit (9a) zu übertragen.

9. Datenübertragungsverfahren zum gesicherten Datentransfer von signierten und verschlüsselten Daten einer Datenquelle (2) einer mobilen Datenladevorrichtung (1) zu einem Avionik-Gerät (3) unter Verwendung einer Datenladevorrichtung (1) gemäß einem oder mehreren der vorangehenden Ansprüche mit den folgenden Schritten:
a. Aktivieren der Datenübertragung mittels Betätigen eines Aktivierungsmoduls einer Benutzeroberfläche (18);
b. Übertragen der signierten und verschlüsselten Daten an die Enschlüsselungsvorrichtung (7) und Erzeugen eines Verfikationsparameters abhängig von der Echtheit der Signatur mittels der DSC-Einheit (9a);
c. Aktivieren der Entschlüsselungssoftware zum Entschlüsseln der Daten in der Entschlüsselungseinheit (9) sofern der Verifikationsparameter einem Wert für die Echtheit der Daten entspricht sowie
d. Übertragen der entschlüsselten Daten an das Avionik-Gerät (3) ohne eine Zwischenspeicherung in der Enschlüsseluhgsvorrichtung (7) und über ein ARINC Datenprotokoll.

10. Datenübertragungsverfahren nach Anspruch 9, wobei beim Aktivieren der Datenübertragung ein Software-Update für das Betriebssystem vorzugsweise zusammen mit einer geänderten Signaturverifikation an die DSC-Einheit (9a) übertragen wird.

11. Datenübertragungsverfahren nach Anspruch 10, wobei die Daten unmittelbar nach Konvertieren der Daten vom Datenkonverter von der Entschlüsselungseinheit (9) direkt an die Avionik-Einheit (3) übertragen werden.

## Claims

1. Mobile data loading device (1) for the secured data transfer of signed and encrypted data from a data source (2) via a decryption-device (17) to an avionic device (3), wherein the data processing device (1) comprises an interface (4) for input of the signed and encrypted data and the data loading device (1) comprises at least one interface (5, 5'), via which the decrypted data can be transmitted to the avionic unit, **characterized in that**
a. the interface (5, 5') is adapted for the transmission of the data based on a ARNIC-data bus protocoll;
b. the data loading device comprising a housing (11) having a data processing unit (17) with a data source (2) comprising encrypted and signed data,
c. the data loading device further comprises a housing (10) having a decryption-device (7) and a decryption unit (9), a DSC (Digital Signature Certification) unit (9a) and an operating system (30) and wherein in the operating system a signature software and an encrypted decryption software is stored wherein,
d. the decryption unit (9) and the DSC unit (9a) are coupled for exchanging at least a verification parameter for the data authenticity.

2. Mobile data loading device (1) according to claim 1, **characterized in that** the decryption unit (9) and the DSC unit (9a) are coupled by such means that a data transfer of data to an interface (5, 5 ') only takes place when the DSC unit (9a) transmits a verification parameter to the decryption unit (9) dependent on a authenticity proof, to enable decryption of the data using the decryption software.

3. Mobile data loading device (1) according to claim 1 or 2, **characterized in that** the decryption software and / or the signature software are stored in encrypted form in the decryption device (7).

4. Mobile data loading device (1) according to at least one of the preceding claims, **characterized in that** the housing (10) is a sealed secure housing (10).

5. Mobile data loading device (1) according to at least one of the preceding claims, **characterized in that** the sealed secure housing (10) is provided with a mechanical and / or electronic seal (22) so that opening of the housing (10) avoids the transfer function of the data loading device (1).

6. Mobile data loading device (1) according to at least one of the preceding claims, **characterized in that** the secure housing (10) is installed in the housing (11).

7. Mobile data loading device (1) according to at least one of the preceding claims, **characterized in that** the data processing device (17) has a user interface (18) in a first housing portion (11a) and wherein the secure housing (10) is installed in a second housing portion (11b) which is separated from the first housing portion (11 a) by a closure plate.

8. Mobile data loading device (1) according to at least one of the preceding claims, **characterized in that** the operating system (30) of the decryption device (7) comprises a verification means configured to verify a software update for the operating system and configured to transmit a changed signature verification to the DSC unit (9a).

9. A data transmission method for the secured data transfer of signed and encrypted data from a data source (2) of a mobile data loading device (1) to an avionic device (3) using a data loading device (1) according to one or more of the preceding claims with the following steps:
a. activating the data transfer by means of operating an activation module of a user interface (18);
b. transmitting the signed and encrypted data to the decryption device (7) and generating a verification parameter depending on the authenticity of the signature by means of the DSC unit (9a);
c. enabling the decryption software to decrypt the data in the decryption unit (9) if the verification parameter corresponds to a value for the authenticity of the data and
d. transferring the decrypted data to the avionic device (3) without an intermediate storage in the decryption device (7) and via an ARINC data protocol.

10. A data transmission method according to claim 9, wherein upon activation of the data transmission a software update is transmitted to the operating system preferably together with a modified signature verification on the DSC unit (9a).

11. Data transmission method according to claim 10, wherein the data is transmitted immediately after converting the data from the data converter from the decryption unit (9) immediately to the avionics device (3).

## Revendications

1. Dispositif mobile de charge dentaire (1) pour le transfert de données sécurisée de données signées et encryptées d'une source de données (2) par l'intermédiaire d'un dispositif décryptage (17) à un dispositif avionique (3), dans lequel le dispositif mobile de charge dentaire (1) comprend une interface (4) pour l'entrée des données signées et encryptées et le dispositif mobile de charge dentaire (1) comprend au moins une interface (5, 5 ') par l'intermédiaire duquel les données décryptées puissent être transmises au dispositif d'avionique, **caractérisé en ce que**
a. l'interface (5, 5') est conçu pour la transmission des données basé sur un protocoll-ARNIC du bus de données;
b. le dispositif mobile de charge dentaire comprenant un boîtier (11) comportant une unité de traitement de données (17) avec une source de données (2) comprenant les données encryptées et signées,
c. le dispositif mobile de charge dentaire comprend en outre un boîtier (10) ayant un dispositif de décryptage (7) et une unité de décryptage (9), une DSC unité (Digital Signature Certification) (9a) et un système d'exploitation (30) et dans lequel dans le système d'exploitation un logiciel de signature et un logiciel de décryptage sont stockées de manière cryptée dans laquelle,
d. l'unité de déchiffrement (9) et l'unité de DSC (9a) sont couplées pour échanger au moins un paramètre de vérification de l'authenticité des données.

2. Dispositif mobile de charge dentaire (1) selon la revendication 1, **caractérisé en ce que** l'unité de déchiffrement (9) et l'unité de DSC (9a) sont couplés par des moyens qu'un transfert de données de données n'a lieu qu' à une interface (5, 5') lorsque l'unité de DSC (9a) transmet un paramètre de vérification à l'unité de déchiffrement (9) dépendent d'une preuve d'authenticité pour activer le décryptage des données en utilisant le logiciel de décryptions.

3. Dispositif mobile de charge dentaire (1) selon la revendication 1 ou 2, **caractérisé en ce que** le logiciel de décryptage et / ou du logiciel de signature sont stockées sous forme cryptées dans le dispositif de décryptage (7).

4. Dispositif mobile de charge dentaire (1) selon au moins l'une des revendications précédentes, **caractérisé en ce que** le boîtier (10) est un boîtier de sécurité scellé (10).

5. Dispositif mobile de charge dentaire (1) selon au moins l'une des revendications précédentes, **caractérisé en ce que** le boîtier de sécurité scellé (10) est pourvu d'un dispositif mécanique et / ou électronique (22) de telle sorte que l'ouverture du boîtier (10) évite la fonction de transfert de données du dispositif mobile de charge dentaire (1).

6. Dispositif mobile de charge dentaire (1) selon au moins l'une des revendications précédentes, **caractérisé en ce que** le boîtier de sécurité (10) est installé dans le boîtier (11).

7. Dispositif mobile de charge dentaire (1) selon au moins l'une des revendications précédentes, **caractérisé en ce que** le dispositif de traitement de données (17) présente un interface utilisateur (18) dans une première partie du boîtier (11a) et dans lequel le boîtier sécurisé (10) est installé dans une seconde partie de boîtier (11 b) qui est séparée de la première partie du boîtier (11a) par une plaque de fermeture.

8. Dispositif mobile de charge dentaire (1) selon au moins l'une des revendications précédentes, **caractérisé en ce que** le système d'exploitation (30) du dispositif de décryptage (7) comprend un dispositif de vérification qui est configurés pour vérifier la mise à jour de logiciel pour le système d'exploitation et configuré pour transmettre une signature de vérification modifiée à l'unité de DSC (9a).

9. Procédé de transmission de données pour la transfert de données sécurisée de données signées et encryptées d'une source de données (2) d'un dispositif mobile de charge dentaire (1) à un dispositif avionique (3) en utilisant un dispositif de de charge dentaire (1) selon à une ou plusieurs des revendications précédentes, comportant les étapes suivantes:
a. activer du transfert de données au moyen d'un module d'exploitation de l'activation d'une interface utilisateur (18);
b. transmettre les données signées et encryptées au dispositif de décryptage (7) et produire d'un paramètre de vérification dépendant de l'authenticité de la signature par l'unifé de DSC (9a);
c. activer le logiciel de décryptage pour décrypter les données dans l'unité de déchiffrement (9) si le paramètre de vérification correspond à une valeur de l'authenticité des données et
d. transférer les données décryptées au dispositif avionique (3) sans stockage intermédiaire dans le dispositif de décryptage (7) et par l'intermédiaire d'un protocole de données ARINC.

10. Procédé de transmission de données selon la revendication 9, dans lequel lors de l'activation de la transmission de données la mise à jour du logiciel du système d'exploitation est transmise de préférence conjointement avec une vérification de la signature modifiée à l'unité de DSC (9a).

11. Procédé de transmission de données selon la revendication 10, dans lequel les données sont transmises immédiatement après la conversion des données à partir du convertisseur de données du dispositif décryptage (9) immédiatement à l'appareil avionique (3).
